# EUROPEAN PATENT SPECIFICATION

(11) **EP 3 538 592 B1**
(45) Date of publication and mention of the grant of the patent: **04.01.2023**
(21) Application number: 17801013.8
(22) Date of filing: 13.11.2017
(51) Int. Cl.: C08H 8/00, B27N 3/04, D21B 1/02, D21B 1/06

(54) **METHOD OF PREPARING A CELLULOSE RICH FIBRE FRACTION AND VALUABLE BY-PRODUCTS**
METHODEN ZUR HERSTELLUNG VON CELLULOSEFASER ANGEREICHERTEN FRAKTIONEN UND WERTVOLLE NEBENPRODUKTE
PROCÉDÉ DE PRÉPARATION DE FRACTIONS RICHES EN FIBRES DE CELLULOSE ET DES SOUS-PRODUITS DE VALEUR

(30) Priority: 11.11.2016 DK PA201670889
(43) Date of publication of application: 18.09.2019
(73) Proprietor: Teknologisk Institut, 2630 Taastrup (DK)
(72) Inventor: HASTRUP, Anne Christine Steenkjær, 4140 Borup (DK); LYSTLUND, Mette Jalving, 2630 Taastrup (DK); BAGGER, Christian Lorentz, 2630 Taastrup (DK); LAWTHER, John Mark, 4000 Roskilde (DK); PETERSEN, Nikolaj From, 2630 Taastrup (DK); BULUT, Sanja, 2630 Taastrup (DK); NATANYA, Majbritt Louie Hansen, 2630 Taastrup (DK)
(74) Representative: Plougmann Vingtoft a/s
(86) International application number: PCT/DK2017/050375
(87) International publication number: WO 2018/086672

(56) References cited:
- WO-A1-2006/111604
- WO-A1-2008/141464
- WO-A1-2010/104458
- WO-A1-2011/028554
- WO-A1-2015/185685
- WO-A2-2006/083605
- REDDY N ET AL: "Natural cellulose fibers from soybean straw", BIORESOURCE TECHNOLOGY, ELSEVIER BV, GB, vol. 100, no. 14, 1 July 2009 (2009-07-01) , pages 3593-3598, XP026021238, ISSN: 0960-8524, DOI: 10.1016/J.BIORTECH.2008.09.063 [retrieved on 2009-04-03]

## Description

### Technical field of the invention

The present invention relates to a low energy and environmental friendly method of preparing a cellulose rich fibre fraction. The method relies on a mechanical pre-treatment of straw, a mild enzymatic delignification to obtain a cellulose rich fibre fraction, a less depolymerized lignin rich fraction and a fraction rich in hemicellulose and oligosaccharides. The non-depolymerized lignin rich fraction and the fraction rich in hemicellulose and oligosaccharides are by-products of commercial value. Furthermore, the invention relates to isolation of the lignin, hemicellulose and oligosaccharide enriched by-products of commercial value. The cellulose rich fibre fraction can be used in pulp molding or wet-forming processes.

### Background of the invention

Pulping is a process used to reduce organic fibrous material (e.g. wood or straw) into cellulose rich fibres for use in different products (e.g. paper, trays and paperboards) and can be performed using either mechanical and/or chemical pulping. Organic material contains large quantities of cellulose, hemicellulose and lignin since they all are major components of the cell wall. The strength and bonding ability of the cellulose rich fibres obtained from pulping is associated with the amount of lignin present in the fibres. Mechanical pulping results in little removal of the lignin content in the organic material, and consequently produces paper of lower quality than paper obtained by chemical pulping methods. Chemical pulping methods remove significant amounts of lignin. The hydrophobic nature of the lignin in the fibres reduce the hydrogen bonds between the cellulose resulting in decreased strength of the wet-formed products produced from these fibres. The advantages of mechanical pulping are its high pulp yield and its low cost. Disadvantages, however, include low fibre and product strength and a tendency to yellow with time primarily caused by high levels of lignin. Chemical pulping on the other hand removes large quantities of lignin resulting in increased strength of the fibres and wet-formed products made from the fibres. There are two primary means of chemical pulping, (i) the sulfite process and (ii) the Kraft process.

The sulfite process cooks wood chips in sulfurous acid in the presence of sulfite and bisulfite salts. The combination of sulfurous acid and sulfite/bisulfite salts degrade and dissolves the lignin in the wood known as delignification. This process rely mainly on acidic cleavage of ether bonds present in lignin, concomitant formation of ligninsulfonates, and liberates the cellulose fibres, which are soft, flexible and moderately strong. Following separation of the cellulose fibres the remaining liquid is termed "brown liqueur". "Brown liquour" is regarded a waste material. However, problems with the process includes limitations on the types of trees for which it is suitable, pollution, and the inability to recover some of the chemicals ejected by the system have resulted in new chemicals being used in the process (i.e. present in the "brown liquour").

The Kraft process ("kraft" is the German for "strength") also known as sulfate process is currently the most widely used chemical pulping system and was invented in 1879. It evolved from the soda processes developed in the nineteenth century, which used strong alkaline solutions to digest wood. Pulpers began adding sodium sulfate to the soda process, and a significantly stronger pulp was produced. Incorrectly termed the "sulfate" process it was much later that chemists discovered that the active ingredient was actually sodium sulfide. The process ultilize strong alkaline conditions with pH in the range 12-14, high cooking temperatures around 170°C, long reaction times and pressurized vessels in the delignification of the wood. These harsh reaction conditions results in cleavage of the ether bonds by nucleophilic sulfide and bisulfides present in the mixture and depolymerization of the lignin as well as cleavage of the hemicellulose - the resulting liquid is also known as black liquor comprising lignin fragments, sugars and inorganic salts. The black liquor offers no commercial value today except for extraction of tall oil and crude terpentine, the remainder often being burned in the pulp mill. The isolated solid pulp consists of about 50% w/w of the dry wood chips loaded.

Hence, an improved method would be advantageous from both a commercial and environmental point of view, wherein less waste is generated (e.g. black liquor in the Kraft process or brown liquor in the sulphite process) and wherein by-products can isolated for use in other products and wherein the cellulose rich fibres retain important properties like strength.

### Summary of the invention

Thus, an object of the present invention relates to a mild method for treating straw material for production of a cellulose rich fibre fraction. In particular, it is an object of the present invention to provide a method for providing a cellulose rich fibre fraction under conditions that allows separation of by-product streams of commercial value such as lignin, hemicellulose and oligosaccharide rich fractions. Thus, the present invention solves the above mentioned problems of the prior art by simultaneously providing a cellulose rich fibre fraction and commercially valuable by-products.

Thus, one aspect of the invention relates to a method for preparing a cellulose rich fibre fraction, said method comprising the steps of:
(a) providing straw
(b) subjecting the straw to a dry mechanical treatment selected from the group consisting of shredding, hammer milling, disc milling grinding and combinations thereof
(c) subjecting the material obtained in (b) to a sieving treatment and obtaining at least two fractions, the first fraction passing through the sieve mesh and the second fraction being retained by the sieve mesh and comprises an amount of fines below 0.2mm in the range from 10-30 w/w%
(d) suspending the second fraction in an aqueous solution having a pH in the range from 9-12.5 and a temperature in the range from 60-120°C, and
(e) separating the material obtained in step (d) into a cellulose rich fibre fraction and a liquid fraction comprising suspended and/or dissolved lignin, hemicellulose and oligosaccharides.

Another aspect of the present disclosure relates to a method for preparing a cellulose rich fibre fraction, said method comprising the steps of: (i) providing straw,
(ii) subjecting the straw to a dry mechanical treatment, (iii) subjecting the material obtained in (ii) to a sieving treatment and obtaining at least two fractions, the first fraction passing through the sieve mesh and the second fraction being retained by the sieve mesh (iv) suspending the second fraction in an aqueous solution comprising one or more enzymes, then adjusting pH of the mixture in the range of 4-6.5 and adjusting the temperature of the mixture in the range of 30-70°C, (v) subjecting the mixture obtained in step (iv) to a continuous or intermittent mechanical defibration under agitation, (vi) separating the material obtained in step (v) into a cellulose rich fibre fraction and a liquid fraction comprising suspended and/or dissolved lignin, hemicellulose and oligosaccharides, (vii) subjecting the liquid fraction obtained in (vi) to lignin precipitation and obtaining a precipitated lignin rich fraction and a hemicellulose and oligosaccharide rich fraction, and (viii) separating the precipitated lignin rich fraction obtained in step (vii) from the hemicellulose and oligosaccharide rich fraction.

Another aspect of the present disclosure relates to a cellulose rich fibre fraction comprising at least 60% cellulose when measured by a standard method combining oxidative acid pre-treatment, followed by acid hydrolysis of cellulose and spectrophotometric determination of constituent glucose, and having a mean fibre length in the range of 0.3-5 mm.

Yet another aspect of the present disclosure is to provide a bleached cellulose rich fibre fraction comprising at least 60% cellulose when measured by a standard method combining oxidative acid pre-treatment, followed by acid hydrolysis of cellulose and spectrophotometric determination of constituent glucose, and having a mean fibre length in the range of 0.3-5 mm.

In a further aspect the present disclosure relates to the use of the cellulose rich fibres or the bleached cellulose rich fibres in pulp moulded materials selected from the group consisting of egg-boxes, packaging for fruit and other foodstuffs, packaging for electrical "whitegoods", disposable medical products disposable bedpans, as well as wet-formed, paper type products requiring cellulose rich fibres and in dry-formed cellulose fibre based products as encountered in air-laid non-woven technology.

Another aspect of the present disclosure pertains to a cellulose rich fibre fraction comprising at least 55 w/w% cellulose, 0.5-17 w/w% lignin, 5-40 w/w hemicellulose and having a mean fibre length in the range of 0.3-5 mm.

A further aspect of the present disclosure pertains to a bleached cellulose rich fibre fraction comprising at least 55 w/w% cellulose, 0.5-17 w/w% lignin, 5-40 w/w hemicellulose and having a mean fibre length in the range of 0.3-5 mm.

A further aspect of the present disclosure pertains to a lignin rich fraction comprising a viscosity in the range from of 5 - 50 mPas when measured at 5.8 w/w % and at pH 2.4.

A further aspect of the present disclosure pertains to a hemicellulose and oligosaccharide rich fraction comprising a viscosity of 1.2 - 20 mPas when measured at 3.3 w/w % drymatter and at pH 10.5

### Brief description of the figures

Figure 1 shows shows a typical set-up for refining straw using gentle enzyme processing and for separating fibre and liquid phases.
Figure 2 shows a typical set-up for refining straw using gentle enzyme processing, for separating fibres from the liquid phase and for separating precipitated lignin from the liquid phase.
Figure 3 shows a flow chart of the process for refining straw without enzymes, for separating fibres from the liquid phase, for separating precipitated lignin from the liquid phase and for obtaining hemicellulose and oligosaccharides.
Figure 4 shows a flow chart of the process for refining straw without enzymes, for separating fibres from the liquid phase, for separating lignin from the liquid phase by ultrafiltration and for obtaining hemicellulose and oligosaccharides, and separation of hemicellulose and oligosaccharides by ultrafiltration.

The present invention will now be described in more detail in the following.

### Detailed description of the invention

### Method for simultaneously preparing a cellulose rich fibre fraction and commercially valuable by-products

One object of the present disclosure relates to a method for preparing a cellulose rich fibre fraction, said method comprising the steps of: (i) providing straw, (ii) subjecting the straw to a dry mechanical treatment, (iii) subjecting the material obtained in (ii) to a sieving treatment and obtaining at least two fractions, the first fraction passing through the sieve mesh and the second fraction being retained by the sieve mesh, (iv) suspending the second fraction in an aqueous solution comprising one or more enzymes, then adjusting pH of the mixture in the range of 4-6.5 and adjusting temperature of the mixture in the range of 30-70°C, (v) subjecting the mixture obtained in step (iv) to a continuous or intermittent mechanical defibration under agitation, (vi) separating the material obtained in step (v) into a cellulose rich fibre fraction and a liquid fraction comprising suspended and/or dissolved lignin, hemicellulose and oligosaccharides, (vii) subjecting the liquid fraction obtained in (vi) to lignin precipitation and obtaining a precipitated lignin rich fraction and a hemicellulose and oligosaccharide rich fraction, and (viii) separating the precipitated lignin rich fraction obtained in step (vii) from the hemicellulose and oligosaccharide rich fraction.

An alternative to the above method may be to directly submit the material obtained in step (ii) to the process in step (iv). Thus an alternative object of the present disclosure relates to a method for preparing a cellulose rich fibre fraction, said method comprising the steps of: (i) providing straw, (ii) subjecting the straw to a dry mechanical treatment, (iv) suspending the material obtained in (ii) in an aqueous solution comprising one or more enzymes, then adjusting the pH of the mixture in the range of 4-6.5 and adjusting the temperature of the mixture in the range of 30-70°C, (v) subjecting the mixture obtained in step (iv) to a continuous or intermittent mechanical defibration under agitation, (vi) separating the material obtained in step (v) into a cellulose rich fibre fraction and a liquid fraction comprising suspended and/or dissolved lignin, hemicellulose and oligosaccharides, (vii) subjecting the liquid fraction obtained in (vi) to lignin precipitation and obtaining a precipitated lignin rich fraction and a hemicellulose and oligosaccharide rich fraction, and (viii) separating the precipitated lignin rich fraction obtained in step (vii) from the hemicellulose and oligosaccharide rich fraction.

To date, common wood pulping processes used on straw, although modified, use the harsh conditions necessary for wood pulping i.e. high temperatures, pressures and extreme pH-levels. These can deliver useful fibres, but extracted hemicelluloses and lignin are broken down to low molecular entities, without useful polymeric functionalities, and minimal added value. The structure of straw is different to wood giving opportunity to process straw using much milder conditions. Bonds between lignin and cellulose and in particular (often ferulate ester bonds) between lignin and arabinoxylan residues in Arabinoxylan type hemicellulose, are easier to access and target. Straw has a lower degree of lignification than wood and the lignin is not so recalcitrant and strongly bonded to hemicellulose. This opens up for a process where conditions in terms of temperature, pressure, pH and shear forces during refining are not as severe with potential to deliver also functionally useful and valuable hemicelluloses and lignins.

The present inventors have developed a new process strategy for processing straw (especially the fibre rich internodes in straws), using a step by step, mainly enzyme mediated, sequential hydrolysis combined with mild thermal (temperatures ranging from 30°C and 70°C) and mechanical treatment. This is sufficient to extract the hemicelluloses and lignin in more useful (less degraded) forms than in conventional pulping without extensive de-polymerization and concurrently delivering fibrillated cellulose rich fibres for pulp-molding and wet-forming. At the same time, the lignin and hemicellulose can be isolated from the pulp liquor, and developed and used in other applications, adding overall value to the pulping operation. Mechanical treatment (application of sheer), such as that encountered in an atmospheric refiner or adapted toothed colloid mill (wet-mill) will further open the structure, facilitating targeted enzyme hydrolysis and the diffusion of released hemicelluloses and lignin out of the fibres.

In the present context, the terms fibres and fibres are used herein interchangeably.

According to step (i) of the method of the present disclosure straw is provided.

Straw is rich in cellulose fibres thus, according to the present disclosure the straw is selected from the group consisting of barley, oats, rice, rye, triticale, wheat and combinations thereof. In the present context the term "straw" is to be understood as the dry stalks of a cereal plant after the grain and chaff have been removed. In order to separate the node and leaf fractions from the fibre rich internode fraction the straw may be subjected to a dry mechanical treatment.

According to step (ii) of the method of the present disclosure the straw may be subjected to a dry mechanical treatment. Thus, according to the present disclosure the dry mechanical treatment is selected from the group consisting of shredding, hammer milling, disc milling grinding and combinations thereof. It may be advantageous to include an initial dry mechanical treatment of the straw raw-materials, which may provide the more fibre rich internodes as a uniform raw material and convert the leaves and nodes to fines.

The internodes can be separated from the other straw components using a chain of dry techniques which may include sieving. In wet forming of fibres, e.g. pulp-molding, a fibre suspension with a consistency of 0.4 to 10% of fibres may be used. The high amount of water that has to be drained off makes drainage resistance a critical property. Presence of excessive fines derived from the leaves during pulping may be undesirable and removal in a simple dry step may bring significant benefit. Indeed, most of the wax and silica present in straw exists in the leaf and node botanical fractions and these may create major problems during wet processing, including machine wear, precipitation and blocking. Removal of at least 80 % of the total silica and wax in the feed straw as described may offer major downstream processing advantages.

According to step (iii) of the method of the present disclosure the material obtained in step (ii) (i.e. the dry mechanically treated straw) is subjected to a sieving treatment in order to obtain at least two fractions, the first fraction passing through the sieve mesh and the second fraction being retained by the sieve mesh. According to the present disclosure, the mesh size of the sieve in step (iii) is in the range of 0.05-0.4 mm, such as in the range from 0.1-0.35, e.g. in the range from 0.15-0.30, such as a range from 0.2-0.25 mm. According to the present disclosure, the mesh size is 0.2 mm.

The sieving treatment may comprise one or more sieves having the same or different mesh sizes. The sieving treatment may be performed in order to separate the leave and node fraction rich in wax and silica from the more fibre rich internodes. It may be preferred to remove the first fraction since the silica rich and waxy particles may block subsequently applied filters. Preferably, at least 80%, such as at least 85%, e.g. at least 90%, such as at least 95% of the total silica and wax in the feed straw is removed by sieving.

According to the present disclosure the first fraction in step (iii) comprises silica rich and waxy particles which are derived from the leaves and node anatomical parts of the straw stems.

In an alternative example step (iii) of the method of the present disclosure may be omitted and thus, directly applying the material obtained in step (ii) in step (iv) of the present disclosure. If step (iii) is omitted the process steps further defined below (e.g. step (iv)-(viii) and other additional steps) are equally applicable to the material obtained in step (ii) as it is for the second fraction obtained in step (iii). If step (iii) is omitted, the resulting pulp (i.e. the cellulose rich fraction) comprise a higher content of "fines" (fibres and particles with length less than 0.2 mm) which may impair drainage speed of said pulp and result in wet-formed products of reduced strength.

In step (iv) of the method of present disclosure the second fraction is suspended in an aqueous solution comprising one or more enzymes, the pH of the mixture is adjusted in the range of 4-6.5 and the temperature of the mixture is adjusted in the range from 30-70°C to liberate the hemicellulose and lignin from the fibres. In order to allow free stirring of the mixture during the treatment of the fibres it may be preferred that the mixture obtained in step (iv) comprises 0.4-10% w/w of the second fraction, such as 1-9.5% w/w, such as 2-9% w/w, e.g. 3-8% w/w, such as 4-7% w/w, e.g. 5-6% w/w of the second fraction.

According to the present disclosure the one or more enzymes in step (iv) are selected from the group consisting of hemicellulases, cellulases and ferulic esterase and combinations thereof. The hemicellulases may be selected from the group consisting of xylanase, pentosanase and combinations thereof. The hemicellulases aids the hydrolysis of hemicellulose in the cell wall. The cellulases may selected from the group consisting of beta glucanases, cellobiases and combinations thereof and can be added in small amount to aid the hydrolysis of cellulose in the cell wall of the fibres. Ferulic esterase may be added to aid in the hydrolysis of the lignin bound to hemicellulose. According to the present disclosure the one or more enzymes are xylanase and ferulic esterase. In the straw cell wall, lignin is bonded to hemicellulose (mainly to arabinoxylan) via ester and ether bridges between arabinose residues on the hemicellulose and ferulic moieties attached to the bulk lignin. Use of the enzymes in combination attacks both the xylan backbone of the arabinoxylan hemicellulose and also ferulic ester bonds between lignin and hemicellulose, thus helping to release lignin and hemicellulose from the cell wall matrix.

According to the present disclosure, the one or more enzymes may be added to the mixture in step (iv) to obtain an enzyme concentration in the range from 0.01-2% w/w, such as in the range of 0.03-1.8% w/w, e.g. in the range of 0.05-1.6% w/w, such as in the range of 0.07-1.4% w/w, e.g. in the range of 0.09-1.2% w/w. The enzyme concentration depend on the enzyme activity however, it may be preferred that the enzyme concentration in the mixture in step (iv) is 1-2% w/w.

According to the present disclosure it may be preferred that the enzyme activity is in the range from 1000-12000 U/g, such as in the range of 2000-10000 U/g, e.g. in the range of 3000-9000 U/g, such as in the range of 4000-8000 U/g, e.g. in the range of 5000-7000 U/g.

According to the present disclosure the pH of the mixture in step (iv) is adjusted in the range of 4-6.5, such as in the range of 4.5-6.0, e.g. in the range of 5.0-5.5 to optimise the activity of the enzymes used in performing targeted hydrolysis of cell wall components. The pH of the mixture in step (iv) may also be adjusted by adding at least one acid and/or buffer selected from the group consisting of phosphoric acid, hydrochloric acid, sulfuric acid, phosphate buffers, acetate buffers, and combinations thereof. In a preferred embodiment the acid is phosphoric acid.

According to the present disclosure the temperature of the mixture in step (iv) is adjusted in the range of 30-70°C, such as in the range of 35-65°C, e.g. in the range of 40-60°C, e.g. in the range of 45-55°C, preferably in the range of 45-65 °C, most preferably in the range of 50-60 °C to optimise the activity of the enzymes used in performing targeted hydrolysis of cell wall components.

In step (v) of the present method, the mixture in step (iv) is subjected to a continuous or intermittent mechanical defibration under agitation.

The one or more enzymes can be added before and/or during the continuous or intermittent mechanical defibration. According to the present disclosure, the one or more enzymes are added before and during the continuous or intermittent mechanical defibration. According to the present disclosure half the amount of total enzyme added is added before continuous or intermittent mechanical defibration while the remaining half is added during continuous or intermittent mechanical defibration.

In the context of the present disclosure the term "continuous mechanical defibration" is to be understood as any mechanical treatment that aids in breaking fibres into smaller fragments and is performed continuously within the process in which it is used.

In the context of the present disclosure the term "intermittent mechanical defibration" is to be understood as any mechanical treatment that aids in breaking fibres into smaller fragments and is performed, in one or more intervals, within the process in which it is used.

It may be preferred to apply continuous mechanical defibration since such continuous process ensure a more uniform defibrillation.

According to the present disclosure the mechanical defibration is selected from the group consisting of wet refining and wet milling. The wet refining may selected from the group consisting of conical refiners, disc type refiners, atmospheric refiners, pressurized refiners and combinations thereof whereas wet milling may be toothed colloid mill. In respect of fibrous substrates refining may be preferred because fibres and fibre bundles longer than 1.5 - 2 mm have a tendency to cause blockages in the teeth of toothed colloid mills and this can interfere with continuous, smooth processing.

In order to obtain an optimal exposure of the fibres to the enzymes, the agitation may be selected from the group consisting of stirring and/or compressed air or gas bubbling agitation and/or vessel-shaking.

Applicable stirrers may be selected from the group consisting of anchor stirrers, blade stirrers, K-stirrers, paddle stirrers or any combinations thereof.

Preferably non-pressurized refiners are applied since such refiners will not compromise the bi-products obtained (i.e. the precipitated lignin rich fraction and the hemicellulose and oligosaccharide rich fraction) as would refiners applying high pressure and high temperature. According to the present disclosure, step (v) is conducted under atmospheric pressure and at the temperature in the range from 30-70°C. The atmospheric refiners may be selected from the group consisting of twin refining plate disc type and/or conical types.

According to the present disclosure, the continuous or intermittent mechanical defibration under agitation is performed for 0.5-8.0 hours such as in the range of 1.0-7.5 hours, e.g. in the range of 1.5-7.0 hours, e.g. in the range of 2.0-6.5 hours, e.g. in the range of 2.5-6.0 hours, e.g. in the range of 3.0-5.5 hours, e.g. in the range of 3.5-5.0 hours, e.g. in the range of 4.0-4.5 hours, preferably for 2 hours.

According to the present disclosure, it may be preferred that the mixture obtained in step (v) is subjected to basification by adjusting the pH to 9.0-11.5, such as in the range from 9.5-11.0, e.g. in the range from 10.0-10.5 and preferably in the range from 10.0-11.0. This, pH adjustment may be performed by adding a base selected from the group consisting of sodium hydroxide, potassium hydroxide, calcium hydroxide, ammonium hydroxide, sodium carbonate and combinations thereof.

According to the present disclosure, the temperature of the mixture obtained in step (v) is increased to 65-95°C, such as in the range from 70-90°C, e.g. in the range from 75-85°C, such as in the range from 80-85°C and preferably to 80°C.

According to the present disclosure, the mixture obtained in step (v) is subjected to basification by adjusting the pH to 9-11.5 and wherein the temperature is increased to 65-95°C

The increase in pH and/or temperate may be applied to inactivate the one or more enzymes in the mixture and to increase the extent of lignin and hemicellulose dissolution from the treated fibres.

It may be preferred that the mixture comprising a pH in the range from 9-12.5 and/or a temperature in the range of 65-95°C is agitated for 5-60 minutes, preferably 10-45 minutes, most preferred 15-30 mins.

According to step (vi) of the method of the present disclosure, the material obtained in step (v) is separated into a cellulose rich fibre fraction and a liquid fraction comprising suspended and/or dissolved lignin, hemicellulose and oligosaccharides.

According to the present disclosure, the separation in (vi) and (viii) is selected from the group consisting of decanting, centrifugation, filtration. In principle, any known method which can be applied to remove an insoluble fibre fraction from a bulk aqueous suspension may be applied. In respect of filtration such filtration may be selected from small mesh filter, pressurised filter, belt filter, filter press and combinations thereof.

According to the present disclosure, the isolated cellulose rich fibre fraction in (vi) comprises defibrillated fibre bundles. Such defibrillated fibre bundles may have an average fibre length in the range of 0.5-2.5 mm and preferably in the range of 0.7-2 mm. The average fibre length is measured using advanced image analysis on a Lauritzen and Wettre fibre analyser. The cellulose rich fibre fraction comprises a cellulose content in the range of 65-99% w/w, such as in the range of 70-90% w/w, e.g. in the range from 80-85% w/w and preferably in the range of 75-95% w/w.

The cellulose rich fibre fraction comprises on a dry matter basis between 40-60% w/w of the mass of the total initial straw biomass input and preferably between 45-55% w/w of the mass of the total initial straw biomass input.

In step (vii) of the method of the present disclosure the liquid fraction obtained in (vi) is subjected to precipitation and obtaining a precipitated lignin rich fraction and a hemicellulose and oligosaccharide rich fraction.

According to the present disclosure, the precipitation in (vii) may be performed by lowering the pH to 2-8, e.g. to 3-7, such as 4-6, e.g. 5-8 by adding an acid selected from the group consisting of hydrochloric acid, sulfuric acid, nitric acid, phosphoric acid and any combinations thereof. According to the present disclosure, the pH is lowered to 2-4, and even more preferred to 2.2-3.5. This ensures full protonation of the lignin phenol groups, lowering solubility and ensuring precipitation.

In step (viii) of the method of the present disclosure the precipitated lignin rich fraction obtained in step (vii) is separated from the hemicellulose and oligosaccharide rich fraction.

According to the present disclosure, the hemicellulose and oligosaccharide rich fraction may be separated into a hemicellulose rich fraction and an oligosaccharide rich fraction by e.g. membrane filtration. Such membrane filtration may be ultrafiltration with an ultrafiltration membrane in the range from 1.000 - 5.000 dalton, e.g. in the range from 2.000 - 4.000 dalton, such as in the range from 1.500 - 3.000 dalton. Following such filtration the permeate is the oligosaccharide rich fraction whereas the retentate is the hemicellulose rich fraction. The oligosaccharides present in the oligosaccharide rich fraction may be termed arabioxylan oligosaccharides which may be abbreviated as AXOS. In case it may be desired the hemicellulose rich fraction may be split into a lower molecular weight hemicellulose and a higher molecular weight hemicellulose by subjecting the hemicellulose rich fraction to a filtration through a 10.000 dalton membrane.

According to the present disclosure, the liquid fraction in step (viii), the hemicellulose rich fraction and/or the oligosaccharide rich fraction may be concentrated by evaporation and obtaining a concentrated liquid fraction having a solid content of at least 7% w/v, such as in the range from 10-40% w/v, e.g. in the range from 20-30% w/v and preferably in the range from 25-35% w/v. The concentrated liquid fraction may be dried using spray drying, flash drying or other such suitable drying method.

According to the present disclosure, the method may further comprise a step of re-suspension of the cellulose rich fibre fraction obtained in step (vi) in an aqueous solution and subjecting the re-suspended cellulose rich fibre fraction to bleaching and obtaining bleached cellulose rich fibres. It may be preferred that the bleaching is performed in an aqueous solution at a concentration of 0.1-10% w/w of the re-suspended cellulose rich fibre fraction, such as 1-9% w/w, e.g. 2-8% w/w, such as 3-7% w/w, e.g. 4-6% w/w, such as 5-7% w/w and preferably 6% w/w of the re-suspended cellulose rich fibre fraction.

According to the present disclosure, the bleaching is performed at a pH in the range from 9-11.5 and in the presence of a bleaching agent selected from the group consisting of hydrogen peroxide, sodium hypochlorite, sodium percarbonate, active oxygen bleaching and mixtures thereof. According to the present disclosure, the pH is in the range from 10-11 and the bleaching agent is hydrogen peroxide. According to the present disclosure, the bleaching is performed at a temperature in the range of 60-120°C, such as in the range from 70-110°C, e.g. in the range from 80-100 °C, such as in the range from 90-100 °C. In order to obtain optimal bleaching of the cellulose rich fibre fraction it may be performed that the bleaching is conducted for at least 1 hour, such as in the range 1-8 hours, e.g. in the range 1-7 hours, e.g. in the range 1-6 hours, e.g. in the range 1-5 hours, e.g. in the range 1-4, e.g. in the range 1-3 hours, e.g. in the range 1-2 hours.

According to the present disclosure, the bleaching is performed at a pH in the range from 9-11.5, at a temperature in the range from 60-120°C and in the presence of a bleaching agent selected from the group consisting of hydrogen peroxide, sodium hypochlorite, sodium percarbonate, active oxygen bleaching and mixtures thereof

In a further step the bleached cellulose rich fibres may be separated from the aqueous solution by applying any of the separation methods disclosed above.

Another object of the present invention relates to a method for preparing a cellulose rich fibre fraction, said method comprising the steps of (a) providing straw, (b) subjecting the straw to a dry mechanical treatment, (c) subjecting the material obtained in (b) to a sieving treatment and obtaining at least two fractions, the first fraction passing through the sieve mesh and the second fraction being retained by the sieve mesh, (d) suspending the second fraction in an aqueous solution having a pH in the range from 9-12.5 and a temperature in the range from 60-120°C, and (e) separating the material obtained in step (d) into a cellulose rich fibre fraction and a liquid fraction comprising suspended and/or dissolved lignin, hemicellulose and oligosaccharides.

An alternative to the above method may be to directly submit the material obtained in step (b) to the process in step (d). Thus an alternative object of the present disclosure relates to a method for preparing a cellulose rich fibre fraction, said method comprising the steps of: (a) providing straw, (b) subjecting the straw to a dry mechanical treatment, (c) suspending the straw from (b) in an aqueous solution having a pH in the range from 9-12.5 and a temperature in the range from 60-120°C, and (d) separating the material obtained in step (c) into a cellulose rich fibre fraction and a liquid fraction comprising suspended and/or dissolved lignin, hemicellulose and oligosaccharides.

In an embodiment the method further comprises steps (f) subjecting the the liquid fraction obtained in (e) to (i) acid precipitation, (ii) ultra filtration and/or ethanol precipitation and obtaining a lignin rich fraction and a hemicellulose and oligosaccharide rich fraction and (g) separating the lignin rich fraction obtained in step (f) from the hemicellulose and oligosaccharide rich fraction.

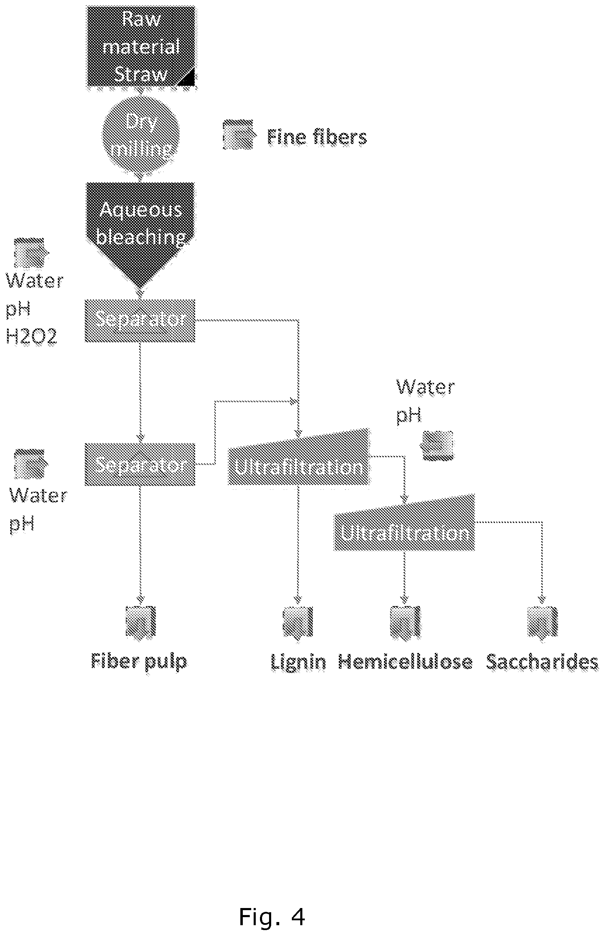

In an embodiment of the present disclosure the liquid fraction obtainend in (d) is subjected to membrane filtrering and obtaining a concentrated lignin rich fraction and a hemicellulose and oligosaccharide rich fraction. Such membrane filtration may be ultrafiltration with an ultrafiltration membrane in the range from 5.000 - 100.000 kdal, e.g. 10.000 - 90.000 kDa, such as 20.000- 80.000 kDa, e.g. 30.000 -70.000 kDa, such as 40.000 - 60.000 kDa, e.g. 50.000 - 65.000 kDa, such as 5.000 -15.000 kDa and preferably 10.000 kDa. kDa is kilodalton. Figure 4.

The separation in step (g) may be performed applying any suitable method such as but not limited to centrifugation or filtration.

In an alternative embodiment the hemicellulose and oligosaccharide rich fraction may be subjected to ultrafiltration in order to obtain a fraction comprising hemicellulose and a fraction comprising oligosaccharides.

In an embodiment the method further comprises subjecting the hemicellulose and oligosaccharide rich fraction to ultrafiltration and obtaining a hemicellulose rich fraction and an oligosaccharide rich fraction. In an embodiment of the present invention the hemicellulose and oligosaccharide rich fraction may be separated into a hemicellulose rich fraction and an oligosaccharide rich fraction by e.g. membrane filtration. Such membrane filtration may be ultrafiltration with an ultrafiltration membrane in the range from 1.000 - 5.000 dalton, such as in the range from 2.000 - 4.000 dalton, e.g. in the range from 1.500 - 3.000 dalton. Figure 4.

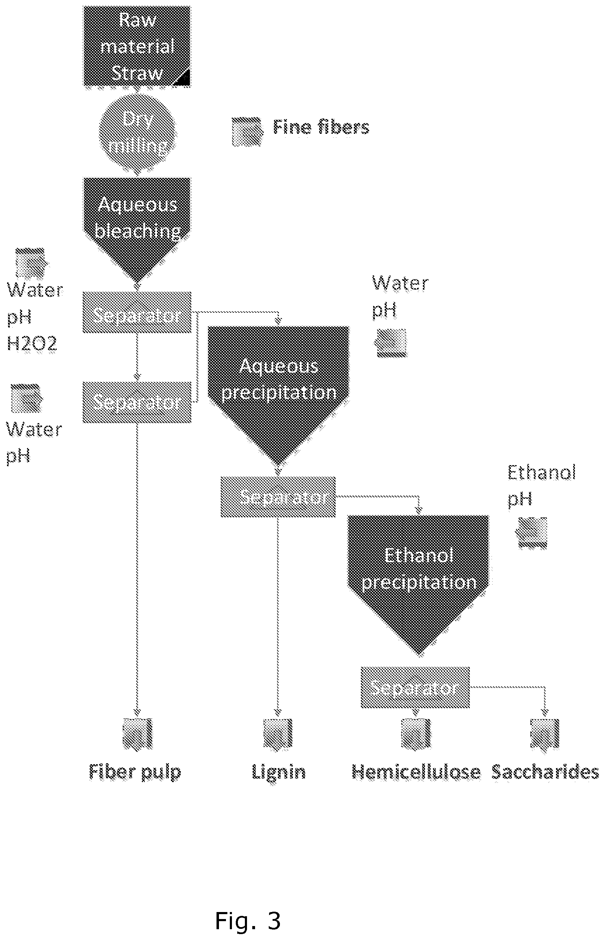

The lignin precipitation in step (e) may be performed by lowering the pH of the lignin fraction to a pH in the range from 2-7, such as in the range from 3-6, e.g. in the range from 4-5, e.g. in the range from 2-3 and preferably at pH 2.4. Eksample 4, figure 3.

In an alternative embodiment the method further comprises steps of obtaining a lignin rich fraction by subjecting the liquid fraction obtained in (e) to ultrafiltration thereby obtaining a lignin rich fraction and a hemicellulose and oligosaccharide rich fraction.

The hemicellulose and oligosaccharide rich fraction obtained in step (f) or in the embodiment specified above may be subjected to a precipitation step where hemicellulose and oligosaccharides are precipitated. The precipitation may be performed by applying a ratio of ethanol to hemicellulose and oligosaccharide rich fraction in the range 1:1 - 1:10, such as from 1:2 - 1:9,e.g. in the range from 1:3-1:8,e.g. in the range from 1:4-1:7, such as in the range from 1:5-1:6 and preferably in the ratio of 1:5. Example 4, figure 3.

It may be preferred to provide bleached fibres, this in one embodiment the aqueous solution may further comprises a bleaching agent selected from the group consisting of hydrogen peroxide, sodium hypochlorite, sodium percarbonate, active oxygen bleaching and mixtures thereof.

In order to avoid a decrease in the tensile strength and flexibility of the cellulose rich fibre fraction it may be preferred that the second fraction comprises an amount of fines below 0.2mm in the range from 10-30 w/w%, such as in the range from, 12-28 w/w%, e.g. in the range from 14-26 w/w%, such as in the range from, 16-24 w/w%, e.g. in the range from 18-20 w/w%, such as in the range from, 19-30 w/w%

To date, common wood pulping processes used on straw, although modified, use the harsh conditions necessary for wood pulping i.e. high temperatures, pressures and extreme pH-levels. These can deliver useful fibres, but extracted hemicelluloses and lignin are broken down to low molecular entities, without useful polymeric functionalities, and minimal added value. The structure of straw is different to wood giving opportunity to process straw using much milder conditions. Bonds between lignin and cellulose and in particular (often ferulate ester bonds) between lignin and arabinoxylan residues in Arabinoxylan type hemicellulose, are easier to access and target. Straw has a lower degree of lignification than wood and the lignin is not so recalcitrant and strongly bonded to hemicellulose. This opens up for a process where conditions in terms of temperature, pressure, pH and shear forces during refining are not as severe with potential to deliver also functionally useful and valuable hemicelluloses and lignins.

The present inventors have developed a new process strategy for processing straw (especially the fibre rich internodes in straws), using a step by step, mainly enzyme mediated, sequential hydrolysis combined with mild thermal (temperatures ranging from 30°C and 70°C) and mechanical treatment. This is sufficient to extract the hemicelluloses and lignin in more useful (less degraded) forms than in conventional pulping without extensive de-polymerization and concurrently delivering fibrillated cellulose rich fibres for pulp-molding and wet-forming. At the same time, the lignin and hemicellulose can be isolated from the pulp liquor, and developed and used in other applications, adding overall value to the pulping operation. Mechanical treatment (application of sheer), such as that encountered in an atmospheric refiner or adapted toothed colloid mill (wet-mill) will further open the structure, facilitating targeted enzyme hydrolysis and the diffusion of released hemicelluloses and lignin out of the fibres.

In the present context, the terms fibres and fibres are used herein interchangeably.

According to step (a) of the method of the present invention straw is provided. Straw is rich in cellulose fibres thus, in one embodiment of the present invention the straw is selected from the group consisting of barley, oats, rice, rye, triticale, wheat and combinations thereof. In the present context the term "straw" is to be understood as the dry stalks of a cereal plant after the grain and chaff have been removed. In order to separate the node and leaf fractions from the fibre rich internode fraction the straw may be subjected to a dry mechanical treatment.

According to step (b) of the method of the present invention the straw may be subjected to a dry mechanical treatment. Thus, in one embodiment of the present invention the dry mechanical treatment is selected from the group consisting of shredding, hammer milling, disc milling grinding and combinations thereof. It may be advantageous to include an initial dry mechanical treatment of the straw raw-materials, which may provide the more fibre rich internodes as a uniform raw material and convert the leaves and nodes to fines.

The internodes can be separated from the other straw components using a chain of dry techniques which may include sieving. In wet forming of fibres, e.g. pulp-molding, a fibre suspension with a consistency of 0.4 to 10% of fibres may be used. The high amount of water that has to be drained off makes drainage resistance a critical property. Presence of excessive fines derived from the leaves during pulping may be undesirable and removal in a simple dry step may bring significant benefit. Indeed, most of the wax and silica present in straw exists in the leaf and node botanical fractions and these may create major problems during wet processing, including machine wear, precipitation and blocking. Removal of at least 80 % of the total silica and wax in the feed straw as described may offer major downstream processing advantages.

According to step (c) of the method of the present invention the material obtained in step (b) (i.e. the dry mechanically treated straw) is subjected to a sieving treatment in order to obtain at least two fractions, the first fraction passing through the sieve mesh and the second fraction being retained by the sieve mesh. In an embodiment of the present invention, the mesh size of the sieve in step (c) is in the range of 0.05-0.4 mm, such as in the range from 0.1-0.35, e.g. in the range from 0.15-0.30, such as a range from 0.2-0.25 mm. In a preferred embodiment, the mesh size is 0.2 mm.

The sieving treatment may comprise one or more sieves having the same or different mesh sizes. The sieving treatment may be performed in order to separate the leave and node fraction rich in wax and silica from the more fibre rich internodes. It may be preferred to remove the first fraction since the silica rich and waxy particles may block subsequently applied filters. Preferably, at least 80%, such as at least 85%, e.g. at least 90%, such as at least 95% of the total silica and wax in the feed straw is removed by sieving.

According to the present disclosure the first fraction in step (c) comprises silica rich and waxy particles which are derived from the leaves and node anatomical parts of the straw stems.

According to the present disclosure step (c) may be omitted and thus, directly applying the material obtained in step (b) in step (d). If step (c) is omitted the process steps further defined below (e.g. step (d)-(e) and other additional steps) are equally applicable to the material obtained in step (b) as it is for the second fraction obtained in step (c). If step (c) is omitted, the resulting pulp (i.e. the cellulose rich fraction) comprise a higher content of "fines" (fibres and particles with length less than 0.2 mm) which may impair drainage speed of said pulp and result in wet-formed products of reduced strength.

In step (d) of the present method, the mixture is subjected to a continuous or intermittent mechanical defibration under agitation.

In the context of the present disclosure the term "continuous mechanical defibration" is to be understood as any mechanical treatment that aids in breaking fibres into smaller fragments and is performed continuously within the process in which it is used.

In the context of the present disclosure the term "intermittent mechanical defibration" is to be understood as any mechanical treatment that aids in breaking fibres into smaller fragments and is performed, in one or more intervals, within the process in which it is used.

It may be preferred to apply continuous mechanical defibration since such continuous process ensure a more uniform defibrillation.

According to the present disclosure the mechanical defibration is selected from the group consisting of wet refining and wet milling. The wet refining may selected from the group consisting of conical refiners, disc type refiners, atmospheric refiners, pressurized refiners and combinations thereof whereas wet milling may be toothed colloid mill. In respect of fibrous substrates refining may be preferred because fibres and fibre bundles longer than 1.5 - 2 mm have a tendency to cause blockages in the teeth of toothed colloid mills and this can interfere with continuous, smooth processing.

In order to obtain an optimal exposure of the fibres to the aqueous solution, the agitation may be selected from the group consisting of stirring and/or compressed air or gas bubbling agitation and/or vessel-shaking.

Applicable stirrers may be selected from the group consisting of anchor stirrers, blade stirrers, K-stirrers, paddle stirrers or any combinations thereof.

Preferably non-pressurized refiners are applied since such refiners will not compromise the bi-products obtained (i.e. the precipitated lignin rich fraction and the hemicellulose and oligosaccharide rich fraction) as would refiners applying high pressure and high temperature. Thus, in a preferred embodiment step (d) is conducted under atmospheric pressure and at the temperature in the range from 60-120°C. The atmospheric refiners may be selected from the group consisting of twin refining plate disc type and/or conical types.

According to the present disclosure, the continuous or intermittent mechanical defibration under agitation is performed for 0.5-8.0 hours such as in the range of 1.0-7.5 hours, e.g. in the range of 1.5-7.0 hours, e.g. in the range of 2.0-6.5 hours, e.g. in the range of 2.5-6.0 hours, e.g. in the range of 3.0-5.5 hours, e.g. in the range of 3.5-5.0 hours, e.g. in the range of 4.0-4.5 hours, preferably for 2 hours.

According to the present disclosure the mixture obtained in step (d) is subjected to basification by adjusting the pH to 9.0-12.5, such as in the range from 9.5-11.0, e.g. in the range from 10.0-10.5 and preferably in the range from 10.0-11.0. This, pH adjustment may be performed by adding a base selected from the group consisting of sodium hydroxide, potassium hydroxide, calcium hydroxide, ammonium hydroxide, sodium carbonate and combinations thereof.

According to the present disclosure, the temperature of the mixture obtained in step (d) is increased to 65-95°C, such as in the range from 70-90°C, e.g. in the range from 75-85°C, such as in the range from 80-85°C and preferably to 80°C.

According to the present disclosure, the mixture obtained in step (d) is subjected to basification by adjusting the pH to 9-12.5 and wherein the temperature is increased to 65-95°C

The increase in pH and/or temperate may be applied to inactivate the one or more enzymes in the mixture and to increase the extent of lignin and hemicellulose dissolution from the treated fibres.

It may be preferred that the mixture comprising a pH in the range from 9-12.5 and/or a temperature in the range of 65-95°C is agitated for 5-60 minutes, preferably 10-45 minutes, most preferred 15-30 minutes.

According to step (e) of the method of the present invention, the material obtained in step (d) is separated into a cellulose rich fibre fraction and a liquid fraction comprising suspended and/or dissolved lignin, hemicellulose and oligosaccharides.

Thus, in one embodiment the separation in (e) and (f) is selected from the group consisting of decanting, centrifugation, filtration. In principle, any known method which can be applied to remove an insoluble fibre fraction from a bulk aqueous suspension may be applied. In respect of filtration such filtration may be selected from small mesh filter, pressurised filter, belt filter, filter press and combinations thereof.

According to the present disclosure the isolated cellulose rich fibre fraction in (d) comprises defibrillated fibre bundles. Such defibrillated fibre bundles may have an average fibre length in the range of 0.5-2.5 mm and preferably in the range of 0.7-2 mm. The average fibre length is measured using advanced image analysis on a Lauritzen and Wettre fibre analyser. The cellulose rich fibre fraction comprises a cellulose content in the range of 55-99% w/w, such as in the range of 70-90% w/w, e.g. in the range from 80-85% w/w and preferably in the range of 75-95% w/w.

The cellulose rich fibre fraction comprises on a dry matter basis between 40-60% w/w of the mass of the total initial straw biomass input and preferably between 45-55% w/w of the mass of the total initial straw biomass input.

According to the present disclosure the liquid fraction obtainend in (d) is subjected to membrane filtrering and obtaining a concentrated lignin rich fraction and a hemicellulose and oligosaccharide rich fraction. Such membrane filtration may be ultrafiltration with an ultrafiltration membrane in the range from 5.000 - 100.000 kdal, e.g. 10.000 - 90.000 kDa, such as 20.000- 80.000 kDa, e.g. 30.000 -70.000 kDa, such as 40.000 - 60.000 kDa, e.g. 50.000 - 65.000 kDa, such as 5.000 -15.000 kDa and preferably 10.000 kDa. kDa is kilodalton. Figure 4.

Ultrafiltration to concentrate lignin may be preferred to precipitation of lignin as the precipitation conditions may hydrolyse hemicellulose and oligosaccharides into smaller sugars.

In step (e) of the method of the present invention the liquid fraction obtained in (d) may be subjected to precipitation and obtaining a precipitated lignin rich fraction and a hemicellulose and oligosaccharide rich fraction.

Thus, according to the present disclosure the precipitation in (e) may be performed by lowering the pH to 2-8, e.g. to 3-7, such as 4-6, e.g. 5-8 by adding an acid selected from the group consisting of hydrochloric acid, sulfuric acid, nitric acid, phosphoric acid and any combinations thereof. The pH may be lowered to 2.4, and even to 2.2-3.5. This ensures full protonation of the lignin phenol groups, lowering solubility and ensuring precipitation. Example 4, figure 3.

In step (f) of the method of the present invention the precipitated lignin rich fraction obtained in step (e) is separated from the hemicellulose and oligosaccharide rich fraction.

In an embodiment of the present invention the hemicellulose and oligosaccharide rich fraction may be separated into a hemicellulose rich fraction and an oligosaccharide rich fraction by e.g. membrane filtration. Such membrane filtration may be ultrafiltration with an ultrafiltration membrane in the range from 1.000 - 5.000 dalton, e.g. in the range from 2.000 - 4.000 dalton, such as in the range from 1.500 - 3.000 dalton. Figure 4.

Following such filtration the permeate is the oligosaccharide rich fraction whereas the retentate is the hemicellulose rich fraction. The oligosaccharides present in the oligosaccharide rich fraction may be termed arabioxylan oligosaccharides which may be abbreviated as AXOS. In case it may be desired the hemicellulose rich fraction may be split into a lower molecular weight hemicellulose and a higher molecular weight hemicellulose by subjecting the hemicellulose rich fraction to a filtration through a 5-10.000 dalton membrane.

According to the present disclosure the liquid fraction in step (f), the hemicellulose rich fraction and/or the oligosaccharide rich fraction may be concentrated by evaporation and obtaining a concentrated liquid fraction having a solid content of at least 7% w/v, such as in the range from 10-40% w/v, e.g. in the range from 20-30% w/v and preferably in the range from 25-35% w/v. The concentrated liquid fraction may be dried using spray drying, flash drying or other such suitable drying method.

The method may further comprise a step of re-suspension of the cellulose rich fibre fraction obtained in step (e) in an aqueous solution and subjecting the re-suspended cellulose rich fibre fraction to bleaching and obtaining bleached cellulose rich fibres. The bleaching may be performed in an aqueous solution at a concentration of 0.1-10% w/w of the re-suspended cellulose rich fibre fraction, such as 1-9% w/w, e.g. 2-8% w/w, such as 3-7% w/w, e.g. 4-6% w/w, such as 5-7% w/w and preferably 6% w/w of the re-suspended cellulose rich fibre fraction.

The bleaching may be performed at a pH in the range from 9-12.5 and in the presence of a bleaching agent selected from the group consisting of hydrogen peroxide, sodium hypochlorite, sodium percarbonate, active oxygen bleaching and mixtures thereof. The pH may be in the range from 10-11 and the bleaching agent is hydrogen peroxide. The bleaching may be performed at a temperature in the range of 60-120°C, such as in the range from 70-110°C, e.g. in the range from 80-100 °C, such as in the range from 90-100 °C. In order to obtain optimal bleaching of the cellulose rich fibre fraction it may be performed that the bleaching is conducted for at least 1 hour, such as in the range 1-18 hours, e.g. in the range 2-77 hours, e.g. in the range 3-16 hours, e.g. in the range 4-15 hours, e.g. in the range 5-14, e.g. in the range 6-13 hours, e.g. in the range 7-12 hours, e.g. in the range 8-11, e.g. in the range 9-10 hours, preferably in the range 6-8 hours,

The bleaching may be performed at a pH in the range from 9-12.5, at a temperature in the range from 60-120°C and in the presence of a bleaching agent selected from the group consisting of hydrogen peroxide, sodium hypochlorite, sodium percarbonate, active oxygen bleaching and mixtures thereof

In a further step the bleached cellulose rich fibres may be separated from the aqueous solution by applying any of the separation methods disclosed above.

Thus, in general terms the present invention pertains e.g. to methods to tailor the functionality of straw pulp fibres having a fibers length of 0.3 - 5 mm, a width of 15 - 50 µm, handsheet Mean load at maximum strength Newton 50 - 100 N and a Schopper Reigler value 10 - 70 °SR.

### Valuable products and by-products obtainable by the method of the present invention

Another object of the present invention pertains to a lignin rich fraction obtainable by the methods of the present invention. A further object of the present invention pertains to a hemicellulose and oligosaccharide rich fraction obtainable by the methods of the present invention. Another object of the present invention pertains to a hemicellulose rich fraction obtainable by the methods of the present invention. Yet another object of the present invention pertains to an oligosaccharide rich fraction obtainable by the methods of the present invention. A further object of the present invention pertains to a cellulose rich fibre fraction obtainable by the methods of the present invention. Yet a further object of the present invention pertains to bleached cellulose rich fibre fraction obtainable by the methods of the present invention.

### Valuable products and by-products of the present invention which may be obtained by the methods of the present invention

It is an object of the present invention to provide a lignin rich fraction comprising at least 60%, preferably in the range of 75% - 99% w/w, most preferably in the range of 80% - 95% w/w lignin.

Also it is an object of the present invention to provide a lignin rich fraction comprising at least 60%, preferably in the range of 75% - 99% w/w, most preferably in the range of 80% - 95% w/w lignin when measured by spectrophotometry.

The lignin content in the fraction is determined using UV-visible absorbance (dioxane-water solution) at 280 nm and 440 nm and comparing with standards. Due to the more gentle method of release employed as compared to traditional chemical pulping of wood or other lignocellulose rich feedstocks such as straws, the lignin in the lignin rich fraction have a molecular weight, as determined by Gel Permeation Chromatography analysis in the range of MW 1200 - 5000 daltons, e.g. 1500 - 4500, such as 2000 - 4000, e.g. 2500 - 3500, such as 3000 - 5000 daltons. The Gel Permeation Chromatography method is disclosed in Lawther et al. 1996.

Also it is a further object of the present invention to provide a hemicellulose and oligosaccharide rich fraction which is obtained after lignin is e.g. precipitated and removed from the liquid phase. The hemicellulose and oligosaccharide rich fraction, on a dry matter basis, comprises at least 50%, such as at least 60%, e.g. at least 70%, such as at least 80%, e.g. at least 90% non-cellulose and non-starch oligo-and polysaccharide, after complete acid hydrolysis and HPLC analysis of constituent sugar residues.

It is a further object of the present invention to provide a hemicellulose rich fraction, comprising at least 50%, such as at least 60%, e.g. at least 70%, such as at least 80%, e.g. at least 90% Arabinoxylans.

It is an even further object of the present invention to provide an oligosaccharides rich fraction, which may be separated from the bulk hemicellulose and oligosaccharide mixed fraction using membrane filtration (such as e.g. Tangential flow ultrafiltration, using 1,000, 2,000 or 5,000 dalton nominal pore size membranes). The oligosaccharides arise from enzymatic hydrolysis (mainly xylanase) of the Arabinoxylan component of the straw cell walls.

An important object of the present invention is to provide a cellulose rich fibre fraction comprising at least 60 % w/w cellulose and with a mean fibre length in the range of 0.3-5 mm, such as in the range from 0.4-4 mm, e.g. in the range from 0.5-3 mm, e.g. in the range from 1-2 mm, preferably in the range from 0.75 - 3 mm and most preferably in the range from 0.75-2.5 mm.

Another important object of the present invention is to provide a bleached cellulose rich fibre fraction comprising at least 60 % w/w cellulose and with a mean fibre length in the range of 0.3-5 mm, such as in the range from 0.4-4 mm, e.g. in the range from 0.5-3 mm, e.g. in the range from 1-2 mm, preferably in the range from 0.75 - 3 mm and most preferably in the range from 1.5-2.5 mm and wherein the fibres are bleached.

An important object of the present invention is to provide a cellulose rich fibre fraction comprising at least 55 % w/w cellulose when measured by a standard method combining oxidative acid pre-treatment, followed by acid hydrolysis of cellulose and spectrophotometric determination of constituent glucose and with a mean fibre length in the range of 0.3-5 mm, such as in the range from 0.4-4 mm, e.g. in the range from 0.5-3 mm, e.g. in the range from 1-2 mm, preferably in the range from 0.75 - 3 mm and most preferably in the range from 0.75-2.5 mm.

Cellulose is determined using a colorimetric / spectrophotometric method (i.e. the standard method mentioned above and below) with the anthrone reagent as follows: 0.3 g (dry weight) ground samples were treated and boiled (at 100°C) with a mixture of nitric/acetic acid (1:8, v/v) for 1 h to remove residual lignin, hemicelluloses and xylosans and, after successive centrifugations, the material was diluted with 67% H2SO4 (v/v). Cellulose was then determined at 620 nm (ie after hydrolytic conversion to glucose) using cold anthrone reagent (Updegraff, D.M., 1969)

Another object of the present invention is to provide a cellulose rich fibre fraction comprising at least 55 w/w% cellulose, 0.5-17 w/w% lignin, 5-40 w/w hemicellulose and having a mean fibre length in the range of 0.3-5 mm.

In an embodiment the cellulose rich fibre fraction comprises at least 55 w/w% cellulose, e.g. at least 70 w/w% cellulose, such as at least 75 w/w cellulose, e.g. at least 80 w/w%, such as at least 85 w/w% cellulose, e.g. at least 90 w/w% cellulose and e.g. at least 95 w/w% cellulose.

In another embodiment the cellulose rich fibre fraction comprises in the range from 1-16 w/w% lignin, e.g. in the range from 4-15 w/w% lignin, such as in the range from 5-14 w/w% lignin, e.g. in the range from 6-13 w/w% lignin, such as in the range from 7-12 w/w% lignin, e.g. in the range from 8-11 w/w% lignin, such as in the range from 9-10 w/w% lignin, e.g. in the range from 2-11 w/w% lignin, such as in the range from 3-10 w/w% lignin, and preferably in the range from 7-9 w/w% lignin and also preferred 8% w/w% lignin.

In a further embodiment the cellulose rich fibre fraction comprises in the range from 7-39 w/w% hemicellulose, such as in the range from 9-37 w/w% hemicellulose, e.g. in the range from 11-35 w/w% hemicellulose, such as in the range from 13-34 w/w% hemicellulose, e.g. in the range from 15-32 w/w% hemicellulose, such as in the range from 17-30 w/w hemicellulose, e.g. in the range from 19-28 w/w% hemicellulose, such as in the range from 21-26 w/w% hemicellulose, e.g. in the range from 23-25 w/w% hemicellulose preferably in the range from 31-33 w/w% hemicellulose and also preferred 32 w/w% hemicellulose.

Another important object of the present invention is to provide a bleached cellulose rich fibre fraction comprising at least 60% w/w cellulose when measured by a standard method combining oxidative acid pre-treatment, followed by acid hydrolysis of cellulose and spectrophotometric determination of constituent glucose and with a mean fibre length in the range of 0.3-5 mm, such as in the range from 0.4-4 mm, e.g. in the range from 0.5-3 mm, e.g. in the range from 1-2 mm, preferably in the range from 0.75 - 3 mm and most preferably in the range from 1.5-2.5 mm and wherein the fibres are bleached.

The bleached cellulose rich fibre fraction is preferably bleached to obtain an ISO brightness in the range of 80 - 95.

Another object of the present invention is to provide a bleached cellulose rich fibre fraction comprising at least 55 w/w% cellulose, 0.5-17 w/w% lignin, 5-40 w/w hemicellulose and having a mean fibre length in the range of 0.3-5 mm.

The bleached cellulose rich fibre fraction comprises at least 55 w/w% cellulose, 65w/w% cellulose, e.g. at least 70 w/w% cellulose, such as at least 75 w/w cellulose, e.g. at least 80 w/w%, such as at least 85 w/w%, e.g. at least 90 w/w%, such as at least 95 w/w%.

The cellulose rich fibre fraction or the bleached cellulose rich fibre fraction comprises in the range from 1-16 w/w% lignin, e.g. in the range from 4-15 w/w% lignin, such as in the range from 5-14 w/w% lignin, e.g. in the range from 6-13 w/w% lignin, such as in the range from 7-12 w/w% lignin, e.g. in the range from 8-11 w/w% lignin, such as in the range from 9-10 w/w% lignin, e.g. in the range from 2-11 w/w% lignin, such as in the range from 3-10 w/w% lignin, and preferably in the range from 7-9 w/w% lignin and also preferred 8% w/w% lignin.

The cellulose rich fibre fraction or the bleached cellulose rich fibre fraction comprises in the range from 7-39 w/w% hemicellulose, such as in the range from 9-37 w/w% hemicellulose, e.g. in the range from 11-35 w/w% hemicellulose, such as in the range from 13-34 w/w% hemicellulose, e.g. in the range from 15-32 w/w% hemicellulose, such as in the range from 17-30 w/w hemicellulose, e.g. in the range from 19-28 w/w% hemicellulose, such as in the range from 21-26 w/w% hemicellulose, e.g. in the range from 23-25 w/w% hemicellulose preferably in the range from 31-33 w/w% hemicellulose and also preferred 32 w/w% hemicellulose.

The cellulose rich fibre fraction or the bleached cellulose rich fibre fraction may comprising a freeness in the range from 10 - 70 °SR, such as in the range from 20-60 °SR, e.g in the range from 30-50 °SR, such as in the range from 40-65 °SR and preferably in the range from 30-65 °SR when measured using the Schopper Riegler Freeness Tester. The higher the °SR value the better de-watering of the cellulose rich fibre fraction or the bleached cellulose rich fibre Different applications needs different °SR and the °SR may be an important value to control in pulp making. Example 4.

The cellulose rich fibre fraction or the bleached cellulose rich fibre fraction may comprise a mean fibre width in the range of 15-50 µm,such as in the range from 20-45 µm, e.g in the range from 25-40 µm, such as in the range from 30-35 µm, preferably in the range from 20-21 µm. The mean fibre width is measured using Lauritzen and Wettre automated fiber analyser. Example 4.

The cellulose rich fibre fraction or the bleached cellulose rich fibre fraction may comprise pulp straw handsheet Mean load at maximum strength Newton 50 - 100 N, such as in the range from 60-90N, e.g. in the range from 70-80 N. Example 4.

The viscosity profile characterise an important functionality for the potential industrial applications of the lignin produced according the described methods within emulsification, binding, gelling, film, rheology controle, surfactans and dispergent agents in products such as paint, adhesives, films, packaging, drilling. An improved viscosity will improved industrial application functionalities.

In the present application all viscosities are measured using: Equipment: Malvern Kinexus Pro+, Methode: Toolkit_V001 Shear rate Table, Measuring system: Fluids Cup and Bobs (CC25), Temperature: 22°C and Shear rate table: 0,5-500 s-1.

It is to be understood that the cellulose rich fraction and/or the bleached cellulose rich fibre fraction fraction may be obtained by a method applying enzymes which is covered by some embodiments of the present invention or the cellulose rich fibre fraction and/or the bleached cellulose rich fibre fraction may be obtain by a method not applying enzymes which is covered by other embodiments of the present invention.

It is to be understood that the lignin rich fraction and/or the hemicellulose and oligosaccharide rich fraction may be obtained by a method applying enzymes which is covered by some embodiments of the present invention or the lignin rich fraction and/or the hemicellulose and oligosaccharide rich fraction may be obtain by a method not applying enzymes which is covered by other embodiments of the present invention.

A further aspect of the present disclosure pertains to methods to tailor the functionality of straw pulp fibres having a mean fibers length of 0.3 - 5 mm, a mean fibre width of 15 - 50 µm and pulp straw handsheet Mean load at maximum strength Newton 50 - 100 N. Example 4.

The present disclosure pertains to a lignin rich fraction comprising a viscosity of 5 - 50 mPas such as in the range from 6-48 mPas, e.g. in the range from 7-46 mPas, such as in the range from 8-44 mPas, e.g. in the range from 9-42 mPas, e.g. in range from 10-40 mPas, such as in the range from 11-38 mPas, e.g. in the range from 12-36 mPas, such as in the range from 11-38 mPas, e.g. in the range from 12-36 mPas, such as in the range from 13-34 mPas, e.g. in the range from 14-32 mPas , such as in the range from 15-30 mPas, e.g. in the range from 16-28 mPas , such as in the range from 17-26 mPas, e.g. in the range from 18-24, such as in the range from 19-22 mPas when measured at 5.8 w/w % and at pH 2.4. It is to be understood that the lignin rich fraction may be obtained by precipitation and/or ultrafiltration. Also it is to be understood that the lignin rich fraction may be obtained by a method applying enzymes which is covered by some embodiments of the present invention or the lignin rich fraction may be obtain by a method not applying enzymes which is covered by other embodiments of the present invention. Example 4.

The present disclosure pertains to a lignin rich fraction comprising 40-90 w/w% lignin and a viscosity in the range from of 5 - 50 mPas when measured at 5.8 w/w %, at pH 2.4 and at 22°C.

The lignin rich fraction comprises 45-85 w/w% lignin, such as 50-80 w/w% lignin, e.g. in the range from 55-75, such as in the range from 60-70, preferably in the range from 55-65 w/w% lignin and more preferably 60 w/w% lignin.

The present disclosure pertains to a hemicellulose and oligosaccharide rich fraction comprising a viscosity of 1.2 - 20 mPas when measured at 3.3 w/w % and at pH 10.5 and at 22°C.

the present disclosure pertains to a hemicellulose and oligosaccharide rich fraction comprising a viscosity of 1.2 - 20 mPas, such as in the range from 2-19 mPas, e.g. in the range from 3-18 mPas, e.g. in range from 4-18 mPas, such as in the range from 5-17 mPas, e.g. in the range from 6-16 mPas such as in the range from 7-15 mPas, e.g. in the range from 8-14 mPas, e.g. in range from 9-13 mPas, such as in the range from 10-12 mPas, e.g. in the range from 11-12 mPas when measured at 3.3 w/w % and at pH 10.5. Example 4.

The hemicellulose and oligosaccharide rich fraction may comprise 10 - 90 w/w% xylose, e.g. 20 - 80 w/w% xylose, e.g. 30 -70 w/w% xylose, e.g. 40 - 60 w/w% xylose, e.g. 50 - 70 w/w% xylose and preferably 35-60 w/w % xylose and more preferably 40 - 50 w/w% xylose. The xylose content is, in the present context, measured using two step acid hydrolysis, HPLC. Example 4.

The surprisingly high concencentration of xylose indicates a potential high concentration of xylan which can be prepared by the inventioned method. Xylans are applicable in food as prebiotics and in non-food coating applications.

It is to be understood that the hemicellulose and oligosaccharide rich fraction may be obtained by precipitation and/or ultrafiltration. Also it is to be understood that the hemicellulose and oligosaccharide rich fraction may be obtained by a method applying enzymes which is covered by some embodiments of the present invention or the hemicellulose and oligosaccharide rich fraction may be obtain by a method not applying enzymes which is covered by other embodiments of the present invention.

### Use of the valuable products and by-products of the present invention

A further object of the present disclosure pertains to the use of a lignin rich fraction as an adhesive, a phenolic component of an adhesive formulation, an antioxidant, a feedstock for producing antioxidant compounds, a source of phenolic compounds such as phenolic aldehydes and phenolic acids and/or for use in asphalt as a bitumen additive and/or extender. The lignin rich fraction may be obtained by the method according to the present invention.

In the present context, the term precipitated lignin rich fraction and lignin rich fraction is used herein interchangeably.

Another object of the present disclosure pertains to the use of a hemicellulose rich fraction as a pre-biotic feed component, in hydrocolloid thickeners, a component in adhesives, a source of xylose, a source of arabinose and/or feedstock for chemicals such as furfural and its derivatives. The hemicellulose rich fraction may be obtained by the method according to the present invention.

Yet a further object of the present disclosure pertains to the use of an oligosaccharide rich fraction as a pre-biotic feed component, a source of xylose, a source of arabinose and/or a feedstock for chemicals such as furfural and its derivatives. The oligosaccharide rich fraction may be obtained by the method according to the present invention.

Another object of the present disclosure pertains to the use of a cellulose rich fibre fraction in pulp moulded materials selected from the group consisting of egg-boxes, packaging for fruit and other foodstuffs, packaging for electrical "whitegoods", disposable medical products (eg vomit-trays and disposable urine bottles for use in hospitals) disposable bedpans, as well as wet-formed, paper type products requiring cellulose rich fibres. Also the cellulose rich fibre fraction may be used in dry-formed cellulose fibre based products as encountered in air-laid non-woven technology. The cellulose rich fibre fraction may be obtained by the method according to the present invention.

A further object of the present disclosure pertains to the use of a bleached cellulose rich fibre fraction in pulp moulded materials selected from the group consisting of egg-boxes, packaging for fruit and other foodstuffs, packaging for electrical "whitegoods", disposable medical products (eg vomit-trays and disposable urine bottles for use in hospitals), disposable bedpans, as well as wet-formed, paper type products requiring cellulose rich fibres. Also the cellulose rich fibre fraction may be used in dry-formed cellulose fibre based products as encountered in air-laid non-woven technology. The bleached cellulose rich fibre fraction may be obtained by the method according to the present invention.

The invention will now be described in further details in the following non-limiting examples.

### Examples

### Example 1

Wheat straw (50 kg) was hammer-milled through a 6 mm sieve plate and the output then transferred to a Skiold disc mill, and disc milled using a 0.2 mm plate gap. The resultant output was then sent through a Engskov-Skiold rotary sieving apparatus and internode rich fractions coming through 1 mm mesh and 3.3mm mesh sieves were retained for wet-processing. The fines fraction, passing through a 0.2 mm mesh, was rejected.

20 kgs of the internode rich material (at 11 % moisture content, meaning 17.8 kg straw input on a dry matter basis) was added to 500 litres of water in a stainless steel tank, at a temperature of 50°C, and the mix stirred mechanically (fitted propeller type stirrer in tank) for 30 mins. The pH of the mix was then adjusted to 5 via addition of phosphoric acid (applied as a 20 % w/v solution). The following enzyme blends were added (obtained from BioCatalysts Ltd, UK): Depol 333P (xylanase activity rich)-20 g, Depol 740 L (beta-glucanase and ferulic esterase activities)- 20 g, Depol 670 L (cellulase activity) - 10 g.

The blend was passed continuously through a Escher Wyss Ravensborg pilot-scale conical refiner and refined for 3 hours, with temperature maintained at 50°C and pH at 5. At this point, the above stated enzyme dosages were repeated in a second addition and the blend refined for a further 2 hours.

The temperature of the mix was raised to 80°C, and pH increased to 10.5 (via addition of 3M NaOH solution) and stirred for 30 minutes, to enhance solubilisation of released hemicellulose and lignin from the fibre mass.

At this point, the blend was passed onto a moving filter belt and the liquid phase drained from the fibrous phase. Portions of the liquid phase were retained for further work up and analysis. The wet fibre was returned to the tank and to it was added a further 400 litres of water at 80°C. The pH was raised to 10.5 (using 3M NaOH solution) and the mix stirred for 5 minutes prior to addition of 5 litres of Hydrogen peroxide (30%w/v in water) for fibre bleaching. This mix was stirred for 3 hours, with temperature maintained at 80°C and pH at 10.5, with a further addition of 2.5 litres of hydrogen peroxide (30% w/v solution in water), after which time the pH was allowed to drop to 8.5 (due to the bleaching reaction). This was followed by neutralization of the sample to pH 7.5 via addition of phosphoric acid.

The mix was passed onto a moving filter belt and the liquid phase drained from the (now cream-white) fibrous phase. The wet fibre was then placed back into the tank, and stirred with 300 litres of fresh water, at room temperature, to wash off remaining bleach liquor. The fibre was again recovered using the moving filter bed, excess water being pressed out, and finally frozen for storage, with 2 x 1kg of the wet fibre mass portions being retained for analysis.

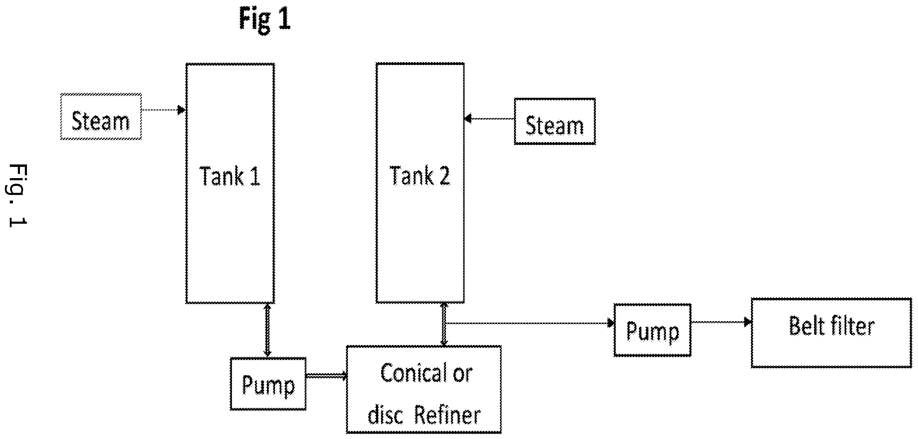

The overall set-up for refining and fibre isolation is shown schematically in fig 1. Determination of dry matter content of the samples and the total mass of wet fibre recovered, indicated that 9.2 kg of bleached, cellulose rich fibre was obtained from the initial 17.8 kg of input. The fibre analysed as having a 82% cellulose content. Analysis in a Lauritzen and Wettre automated fibre analyser (using rapid image analysis) indicated a mean fibre length of 0.75 mm.

### Example 2

Wheat straw raw material was dry-fractionated as described in example 1 and the internode rich fractions used for wet-processing.

20 kgs of the internode rich material (at 11 % moisture content, i.e. input of 17.8 straw on a dry matter basis) was added to 500 litres of water in a stainless steel tank, at a temperature of 50°C, and the mix stirred mechanically (fitted propeller type stirrer in tank) for 30 mins. The pH of the mix was then adjusted to 5 via addition of phosphoric acid (applied as a 20 % w/v solution). The following enzyme blends were added, which were obtained from BioCatalysts Ltd, UK: Depol 333P (xylanase rich)-5 g, Depol 740 L (beta-glucanase and ferulic esterase activities)- 5 g.

The blend was passed continuously through a Escher Wyss Ravensborg pilot-scale conical refiner and refined for 2 hours, with temperature maintained at 50°C and pH at 5. At this point, the above stated enzyme dosages were repeated in a second addition and the blend refined for a further 1.5 hours. The temperature of the mix was raised to 80°C, and pH to 10.5 (via addition of 3M NaOH solution) and stirred for 30 minutes, to enhance solubilisation of released hemicellulose and lignin from the fibre mass.

At this point, the blend was passed onto a moving filter belt and the liquid phase drained from the fibrous phase. Portions of the liquid phase were retained for further work up and analysis. The wet fibre was returned to the tank and to it was added a further 400 litres of water at 80°C. The pH was raised to 10.5 (using 3M NaOH solution) and the mix stirred for 5 minutes prior to addition of 3 litres of Hydrogen peroxide (30%w/v in water) for fibre bleaching. This mix was stirred for 3 hours, with temperature maintained at 80°C and an initial pH at 10.5, with a further addition of 2 litres of hydrogen peroxide (30% w/v solution in water) at the 1.5 hour point, after which time the pH was allowed to drop to 8.5 due to the bleaching reaction, followed by neutralization of the sample to pH 7.5 via addition of phosphoric acid.

The mix was passed onto a moving filter belt and the liquid phase drained from the (now white) fibrous fraction. The wet fibre was then placed back into the tank, and stirred with 300 litres of fresh water, at room temperature, to wash away bleaching liquor. The fibre was again recovered using the moving filter bed, excess water being pressed out, and then frozen for storage, with 2 x 1kg of the wet fibre mass portions being dried for analysis.

Determination of dry matter content of the samples and the total mass of wet fibre recovered, indicated that 9.4 kgs of bleached, cellulose rich fibre was produced from the initial 17.8 kgs of input. The fibre analysed as having a 81 % cellulose content. Analysis in a Lauritzen and Wettre automated fibre analyser (using rapid image analysis) indicated a mean fibre length of 0.95 mm.

### Example 3

Wheat straw raw material was dry-fractionated as described in example 1 and the internode rich fractions used for wet-processing.

20 kgs of the internode rich material (at 11 % moisture content, meaning 17.8 kg straw on a dry matter basis) was added to 500 litres of water in a stainless steel tank, at a temperature of 50°C, and the mix stirred mechanically (fitted propeller type stirrer in tank) for 30 mins. The pH of the mix was then adjusted to 5 via addition of phosphoric acid (applied as a 20 % w/v solution). The following enzyme blends were then added, which were obtained from BioCatalysts Ltd, UK: Depol 333P (xylanase rich)-5 g, Depol 740 L (beta-glucanase and ferulic esterase activities)- 5 g.

The blend was passed continuously through a Escher Wyss Ravensborg pilot-scale conical refiner and refined for 1.5 hours, with temperature maintained at 50°C and pH at 5. At this point, the above stated enzyme dosages were repeated in a second addition and the blend refined for a further 1.5 hours. The temperature of the mix was raised to 80°C, and pH to 10.5 (via addition of 3M NaOH solution) and stirred for 30 minutes, to enhance solubilisation of released hemicellulose and lignin from the fibre mass.

At this point, the blend was passed onto a moving filter belt and the liquid phase drained from the fibrous phase. The fibre phase was not further processed in this trial.

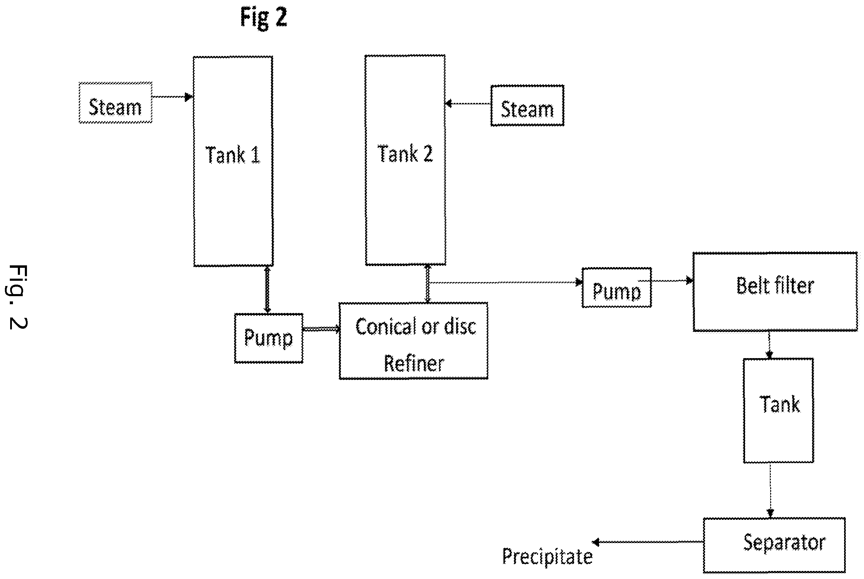

20 litres was removed from the liquid phase, and the remainder (396 litres) was replaced into the reaction tank and stirring commenced, at ambient temperature. The pH (measured at 9.5) was then dropped to 2.4 via addition of an aliquot of 20% w/v Phosphoric acid. The liquid was observed to cloud due to lignin material flocculation. Stirring was stopped and the precipitate phase was allowed to settle overnight (12 hours) to the bottom of the tank. The bottom 100 litres containing the precipitate was then removed from the tank and fed to a Westfalia SB 7-06-576 two-phase separator, and the (bottom-phase) dark-brown precipitate collected as a paste, which was then washed with acidic water, refiltered and dried. Yield (dry matter basis) was 1725g. The material analysed as 77% lignin phenolic material, the remainder being carbohydrate in nature. The original lignin content of the straw was determined at 14.1%, meaning that the total lignin introduced to the vessel was 2509g. Hence around 53% of the original lignin material present in the straw was recovered from the process liquor via this approach. The overall set-up for refining and lignin precipitate isolation is shown schematically in fig 2. The 20 litres removed was placed in a plastic vessel, and to it was added an equal volume of 95% ethanol, with stirring. The mix was placed in a large refrigerator overnight and hemicellulosic material allowed to settle out. The excess clear phase on top was siphoned off and the remaining 5 liters containing precipitate was centrifuged in batches and the pellets obtained washed in ethanol and then dried at 50 °C. 216 g of light tan-coloured material was recovered. The material analysed as containing 68% hemicellulosic polysaccharide.

### Example 4

### Non-enzymatic treatment

Wheat straw was hammer-milled through a 6 mm sieve plate and the output then transferred to a Skiold disc mill, and disc milled using a 0.2 mm plate gap. The resultant output was then sent through a Engskov-Skiold rotary sieving apparatus and internode rich fractions coming through 1 mm mesh and 3.3mm mesh sieves were retained for wet-processing. The fines fraction, passing through a 0.2 mm mesh, was rejected.

132 grams of the internode rich material was added to 3 litres of water in a stainless steel tank, at a temperature of 50°C, the mix stirred mechanically (fitted propeller type stirrer in tank). pH was raised to pH 10,5 - 12,5 (via addition of 3M NaOH solution) and the mix was stirred for 5 minutes prior to addition of 30 ml of Hydrogen peroxide (30%w/v in water). After 1,5 hours the mixture temperature was raised to 80 C and additionally 30 ml of hydrogen peroxide (30%w/v in water) was added for fiber bleaching. After 20 hours the mix was separated by filtration resulting in 2.247 g liquid fraction containing lignin, hemicellulose and oligosaccharides, and 331 g solid fraction containing pulp fibers.

Pulp fibers were analysis in a Lauritzen and Wettre code 912 automated fibre analyser (using rapid image analysis) indicated a mean fibre length of xxxx mm. Further the pulp was neutralized to pH 7,5 via addition of phosphoric acid before making hand sheets (Hand sheet former method) the dried hand sheets were strength testedon a Instron 5982, method ISO 5270.

### Liquid fraction.

200 ml liquid fraction was taken out for ethanol precipitation hemicellulose and oligosaccharides:
pH was adjusted to 7.0 using phosphoric acid and 800 ml ethanol 96% was added.

The mixture was separated by centrifugation (5 min, 5000 rpm) in to 825 g liquid and 49 g solid fraction containing hemicellulose and oligosaccharides (Name Hemicellulose I).

1.500 ml liquid fraction was submitted to acid precipitation of lignin followed by ethanol precipitation of hemicellulose and oligosaccharides:
The pH of the 1.500 ml was adjusted to pH 2.4 using phosphoric acid. The mixture was separated by centrifugation (5 min, 5000 rpm) in to 1.469 g liquid and 131 g solid fraction containing lignin. (Name lignin I) 200 ml liquid fraction after lignin precipitation was taken out for ethanol precipitation hemicellulose and oligosaccharides: pH was adjusted to 7.0 using 2M NaOH and 800 ml ethanol 96% was added. The mixture was separated by centrifugation (5 min, 5000 rpm) in to 823 g liquid and 55 g solid fraction containing hemicellulose and oligosaccharides. (Name hemicellulose II)

### Analysis

| **Fiber analyser L&W** | **Mean fiber length (mm)** | **Mean fiber width (µm)** | **Fines (<0.2mm) (%)** |
|---|---|---|---|
| Pulp fibers | 0.840 | 19.7 | 13.8 |

| | | | |
|---|---|---|---|
| Lauritzen and Wettre code 912 automated fibre analyser (using rapid image analysis) | | | |

| **Schopper Riegler** | °SR | SRcorr^{∗} |
|---|---|---|
| Pulp fibers | 25 | 31 |

| | | |
|---|---|---|
| Schopper Riegler Freeness Tester | | |

### Comparing non-enzyme / enzyme process

| **Fiber analyser L&W** | **Mean fiber length (mm)** | **Mean fiber width (µm)** | **Fines (<0.2mm) (%)** |
|---|---|---|---|
| Pulp fibers | 0.840 | 19.7 | 13.8 |
| Enzyme pulp fibers | 0.641 | 27.6 | 22.1 |

| | | | |
|---|---|---|---|
| Lauritzen and Wettre code 912 automated fibre analyser (using rapid image analysis) | | | |

| **Physical hand sheet tests** | Mean load at maximum strength Newton. |
|---|---|
| Pulp fibers | 52 sta.dev. 11 - 90 sta.dev. 6 |
| Enzyme pulp fibers | 73 sta.dev. 6 - 87 sta.dev. 11 |

| | |
|---|---|
| Instron 5982, ISO5270. Sta.dev. = standard deviation | |

| | Polysaccharide constituents (% of DM) | | | | |
|---|---|---|---|---|---|
| | Glucose | Xylose | Galactose | Arabinose + Mannose | Total |
| Hemicellulose, enzyme | 10.3 | 3.4 | 5.5 | 4.0 | 23.3 |
| Hemicellulose I | 10.0 | 47.4 | 5.5 | 14.0 | 76.8 |
| Hemicellulose II | 2.3 | 10.8 | 2.0 | 4.8 | 19.9 |
| Lignin I, enzyme | 10.9 | 4.3 | 3.6 | 3.6 | 22.4 |
| Lignin I | 3.3 | 6.0 | 0.7 | 1.6 | 11.6 |
| Pulp fibres | 66.4 | 34.0 | 0.0 | 5.0 | 105.4 |
| Raw material | 46.0 | 32.8 | 1.5 | 4.1 | 84.4 |

| | | | | | |
|---|---|---|---|---|---|
| Two step acid hydrolysis, HPLC. | | | | | |

| **Viscocity** | **3.3 % dm** | **1.7 % dm** | **0.8 % dm** |
|---|---|---|---|
| Hemicellulose I^{∗}, pH 10.5 | 14.3 | 4.1 | 2.1 |
| Hemicellulose II^{∗}, pH 10.5 | 1.6 | 1.3 | 1.2 |
| Enzyme Hemicellulose I^{∗}, pH 10.5 | 4.4 | 1.5 | 1.3 |

| **Viscosity** | **11.5 % dm** | **5.8 % dm** | **2.9 % dm** |
|---|---|---|---|
| Lignin I^{∗∗}, pH 2.4 | 154.5 | 10.1 | 2.7 |
| Enzyme Lignin I^{∗∗}, pH 10.5 | 50.0 | 4.1 | 2.1 |

| | | | |
|---|---|---|---|
| Malvern Kinexus Pro+, ^{∗}Viscocity, v. shear rate 79,25/s, η (mPa·s), ^{∗∗}Viskositet, v. shear rate 125,6/s, η (mPa·s) | | | |

| **Schopper Riegler** | °SR | SRcorr^{∗} |
|---|---|---|
| Pulp fibers | 25 | 31 |
| Enzyme pulp fibers | 52 | 62 |

| | | |
|---|---|---|
| Schopper Riegler Freeness Tester | | |

### Analysis of raw materials and enzyme pulp fibers

| Analysis | Cellulose % | Lignin % | Hemicellulose % | CHCL3 |
|---|---|---|---|---|
| Raw material | 42 | 15.2 | 38.3 | 2.4 |
| Enzyme pulp fibres | 56 | 8.1 | 32 | na |

| | | | | |
|---|---|---|---|---|
| Gravimetric analysis | | | | |

### Bleaching after enzyme process effect on mean fiber length and width

| Fiber sample | Mean fiber length (mm) | Mean fiber width (µm) | Fines (<0.2mm) (%) |
|---|---|---|---|
| 1st refining step 4 h | 0.896 | 45.2 | 13.5 |
| 2nd refining step 5 h | 0.874 | 39.8 | 20.6 |
| 3rd refining step 6 h | 0.756 | 37.0 | 15.7 |
| 4th refining step 29 h | 0.641 | 27.6 | 22.1 |
| Non-enzymatic | 0.841 | 20.5 | 11.6 |

| | | | |
|---|---|---|---|
| Lauritzen and Wettre code 912 automated fiber analyzer (using rapid image analysis) | | | |

### Bleaching after enzyme process effect on Schopper Riegler value

| Fiber sample | SR | SRcorr^{∗} |
|---|---|---|
| 1st refining step, 4 h | 14 | 17 |
| 2nd refining step, 5 h | 24 | 30 |
| 3rd refining step, 6 h | 37 | 46 |
| 4th refining step, 29 h | 52 | 62 |
| Non-enzymatic, 18 h | 25 | 31 |

| | | |
|---|---|---|
| Schopper Riegler Freeness Tester | | |

### References

J. M. Lawther, R.-C. Sun and W.B. Banks: "Rapid isolation and structural characterization of alkali-soluble lignins during alkaline treatment and atmospheric refining of wheat straw", 1996, Ind Crops and Prods, 5, pp 97-105*.*

Updegraff, D.M., 1969. "Semimicro determination of cellulose in biological materials". Anal. Biochem. 32, 420-424.

## Claims

1. A method for preparing a cellulose rich fibre fraction, said method comprising the steps of:
(a) providing straw
(b) subjecting the straw to a dry mechanical treatment selected from the group consisting of shredding, hammer milling, disc milling grinding and combinations thereof
(c) subjecting the material obtained in (b) to a sieving treatment and obtaining at least two fractions, the first fraction passing through the sieve mesh and the second fraction being retained by the sieve mesh and comprises an amount of fines below 0.2mm in the range from 10-30 w/w%
(d) suspending the second fraction in an aqueous solution having a pH in the range from 9-12.5 and a temperature in the range from 60-120°C, and
(e) separating the material obtained in step (d) into a cellulose rich fibre fraction and a liquid fraction comprising suspended and/or dissolved lignin, hemicellulose and oligosaccharides.

2. A method according to claim 1, wherein the aqueous solution in step (d) comprises one or more enzymes.

3. A method according to claims 1 or 2, wherein the enzymes in step (d) are selected from the group consisting of hemicellulases, cellulases and ferulic esterase and combinations thereof.

4. A method according to any of claims 1-3, wherein the method further comprises steps:
(f) subjecting the liquid fraction obtained in (e) to (i) acid precipitation (ii) ultra filtration and/or ethanol precipitation and obtaining a lignin rich fraction and a hemicellulose and oligosaccharide rich fraction, and
(g) separating the lignin rich fraction obtained in step (f) from the hemicellulose and oligosaccharide rich fraction.

5. A method according to claim 4, wherein the hemicellulose and oligosaccharide rich fraction from step (g) is subjected to ultrafiltration and obtaining a hemicellulose rich fraction and an oligosaccharide rich fraction.

6. A method according to any of the preceding claims, wherein the aqueous solution further comprises a bleaching agent selected from the group consisting of hydrogen peroxide, sodium hypochlorite, sodium percarbonate, active oxygen bleaching and mixtures thereof.

## Patentansprüche

1. Verfahren zur Herstellung einer cellulosereichen Faserfraktion, wobei das Verfahren die folgenden Schritte umfasst:
(a) Bereitstellen von Stroh,
(b) Unterziehen des Strohs einer mechanischen Trockenbehandlung, die aus der Gruppe ausgewählt wird, die aus Zerkleinern, Hammermahlen, Scheibenmahlen und Kombinationen davon besteht,
(c) Unterziehen des in (b) erhaltenen Materials einer Siebbehandlung und Erhalten von mindestens zwei Fraktionen, wobei die erste Fraktion durch das Siebgewebe geführt wird und die zweite Fraktion durch das Siebgewebe zurückgehalten wird und eine Feinteilmenge unter 0,2 mm im Bereich von 10-30 Gew.-% umfasst,
(d) Suspendieren der zweiten Fraktion in einer wässrigen Lösung mit einem pH-Wert im Bereich von 9-12,5 und einer Temperatur im Bereich von 60-120 °C und
(e) Trennen des in Schritt (d) erhaltenen Materials in eine cellulosereiche Faserfraktion und eine flüssige Fraktion, die suspendiertes und/oder gelöstes Lignin, Hemicellulose und Oligosaccharide umfasst.

2. Verfahren nach Anspruch 1, wobei die wässrige Lösung in Schritt (d) ein oder mehrere Enzyme umfasst.

3. Verfahren nach Anspruch 1 oder 2, wobei die Enzyme in Schritt (d) aus der Gruppe ausgewählt sind, die aus Hemicellulasen, Cellulasen und Ferulasäureesterase und Kombinationen davon besteht.

4. Verfahren nach einem der Ansprüche 1-3, wobei das Verfahren ferner folgende Schritte umfasst:
(f) Unterziehen der in (e) erhaltenen flüssigen Fraktion einer (i) Säurefällung, (ii) Ultrafiltration und/oder Ethanolfällung und Erhalten einer ligninreichen Fraktion und einer hemicellulose- und oligosaccharidreichen Fraktion und
(g) Trennen der in Schritt (f) erhaltenen ligninreichen Fraktion von der hemicellulose- und oligosaccharidreichen Fraktion.

5. Verfahren nach Anspruch 4, wobei die hemicellulose- und oligosaccharidreiche Fraktion aus Schritt (g) einer Ultrafiltration unterzogen wird und eine hemicellulosereiche Fraktion und eine oligosaccharidreiche Fraktion erhalten werden.

6. Verfahren nach einem der vorhergehenden Ansprüche, wobei die wässrige Lösung ferner ein Bleichmittel umfasst, das aus der Gruppe ausgewählt ist, die aus Wasserstoffperoxid, Natriumhypochlorit, Natriumpercarbonat, Aktivsauerstoffbleiche und Gemischen davon besteht.

## Revendications

1. Procédé de préparation d'une fraction fibreuse riche en cellulose, ledit procédé comprenant les étapes suivantes :
(a) fournir de la paille
(b) soumettre la paille à un traitement mécanique à sec choisi dans le groupe constitué par le déchiquetage, le broyage à marteaux, le broyage à disques et leurs combinaisons
(c) soumettre le matériau obtenu en (b) à un traitement de tamisage et obtenir au moins deux fractions, la première fraction passant à travers la maille du tamis et la deuxième fraction étant retenue par la maille du tamis et comprenant une quantité de fines inférieure à 0,2 mm dans une fourchette comprise entre 10 et 30 % en poids
(d) suspendre la seconde fraction dans une solution aqueuse ayant un pH compris entre 9 et 12,5 à une température comprise entre 60 et 120°C, et
(e) séparer le matériau obtenu à l'étape (d) en une fraction fibreuse riche en cellulose et une fraction liquide comprenant de la lignine, de l'hémicellulose et des oligosaccharides en suspension et/ou dissous.

2. Procédé selon la revendication 1, dans lequel la solution aqueuse de l'étape (d) comprend une ou plusieurs enzymes.

3. Procédé selon les revendications 1 ou 2, dans lequel les enzymes de l'étape (d) sont choisies dans le groupe constitué par les hémicellulases, les cellulases et l'estérase férulique et leurs combinaisons.

4. Procédé selon l'une des revendications 1 à 3, dans lequel le procédé comprend en outre les étapes suivantes :
(f) soumettre la fraction liquide obtenue en (e) à (i) une précipitation acide (ii), une ultrafiltration et/ou une précipitation à l'éthanol et obtenir une fraction riche en lignine et une fraction riche en hémicellulose et en oligosaccharides, et
(g) séparer la fraction riche en lignine obtenue à l'étape (f) de la fraction riche en hémicellulose et en oligosaccharides.

5. Procédé selon la revendication 4, dans lequel la fraction riche en hémicellulose et en oligosaccharides de l'étape (g) est soumise à une ultrafiltration et une fraction riche en hémicellulose et d'une fraction riche en oligosaccharides sont obtenues.

6. Procédé selon l'une des revendications précédentes, dans lequel la solution aqueuse comprend en outre un agent de blanchiment choisi dans le groupe constitué par le peroxyde d'hydrogène, le hypochlorite de sodium, le percarbonate de sodium, l'agent de blanchiment à l'oxygène actif et leurs mélanges.
